# EUROPEAN PATENT APPLICATION

(11) **EP 2 863 522 A1**
(43) Date of publication of application: **22.04.2015**
(21) Application number: 13807869.6
(22) Date of filing: 05.06.2013
(51) Int. Cl.: H02K 9/19, H02K 1/32, H02K 16/02, F16L 27/093

(54) **ROTATING ELECTRICAL MACHINE**

(30) Priority: 19.06.2012 JP 2012137610
(71) Applicant: Kabushiki Kaisha Toyota Jidoshokki, Kariya-shi, Aichi 448-8671 (JP)
(72) Inventor: HAYASHI, Hirohito, Kariya-shi Aichi 448-8671 (JP); KUBO, Hidehito, Kariya-shi Aichi 448-8671 (JP); MATSUMOTO, Shohei, Kariya-shi Aichi 448-8671 (JP); YUMOTO, Shuji, Kariya-shi Aichi 448-8671 (JP); YOSHIHARA, Koji, Kariya-shi Aichi 448-8671 (JP); FUJIWARA, Hirofumi, Kariya-shi Aichi 448-8671 (JP); UETSUJI, Kiyoshi, Kariya-shi Aichi 448-8671 (JP)
(74) Representative: TBK
(86) International application number: PCT/JP2013/065608
(87) International publication number: WO 2013/190999

(57) **Abstract**

A rotating electric machine 101 comprises: an input shaft 40; and a first rotor 10 which includes a first coil 12 capable of generating a rotating magnetic field and is provided on an outer circumferential surface 43b of the input shaft 40 so as to be rotatable integrally therewith. The input shaft 40 includes: oil passage sections 44a to 44c passing within the input shaft 40; and first rotor oil supply holes 43c which extend from the third oil passage section 44c to the outer circumferential surface 43b of the input shaft 40 and open opposite to the first rotor 10. The first rotor 10 includes cutout grooves 11f which are disposed so as to face the outer circumferential surface 43b of the input shaft 40 and which communicate with the first rotor oil supply holes 43c.

## Description

### TECHNICAL FIELD

The present invention relates to a rotating electric machine.

### BACKGROUND ART

A rotating electric machine, in which a rotor is rotated by electromagnetism and the rotor includes a coil, is provided with a cooling structure for cooling the rotor due to the fact that the rotor generates heat when an AC current flows in the coil.

For instance, the rotating electric machine described in Patent Document 1 includes an input-side rotor which is connected to the input shaft to which the driving force of an engine is transmitted, and is disposed at the innermost position, an output-side rotor which is disposed so as to face the input-side rotor at a position radially outside the input-side rotor and which is connected to the output shaft extending to a transmission, and a stator which is disposed so as to face the output-side rotor at a position radially outside the output-side rotor and which is fixed to the stator case.

An oil storage member for storing oil that acts as cooling liquid is provided over the whole of the inner periphery of the input-side rotor between the input-side rotor and the input shaft, and the oil storage member is connected to the input shaft by the connecting member so as to rotate together with the input shaft and the input-side rotor. Oil is stored in the oil reservoir located between the opposite ends of the oil storage member which extend along the axial direction of the input shaft in the oil storage member and sandwich the connecting member therebetween. A plurality of oil ejecting ports for ejecting the stored oil are formed at the opposite ends of the oil storage member. Further, in the input shaft, an oil passage to which oil is supplied from an external source, and a plurality of oil discharge ports for ejecting oil into the oil reservoir of the oil storage member, are formed. Consequently, the oil supplied into the input shaft flows into the oil reservoir via the oil passage, cools the input-side rotor, and is then discharged from the oil discharge ports by the centrifugal force generated by the input-side rotor.

### PRIOR ART DOCUMENT

### PATENT DOCUMENT

Patent Document 1: Japanese Patent Application Laid Open No. 2011-62061

### SUMMARY OF THE INVENTION

### PROBLEM TO BE SOLVED BY THE INVENTION

However, in the rotating electric machine of Patent Document 1, a plurality of holes are formed in the input shaft in order for the oil flowing inside the input shaft to be able to be ejected into the oil reservoir, and moreover, the plurality of holes are formed at the opposite ends of the oil storage member in order for the oil in the oil storage member to be ejected to the outside. Accordingly, a large number of hole forming processes are required during manufacture, and hence there is a problem in that costs increase.

The present invention was conceived in order to solve problems such as described above, an object thereof being to provide a rotating electric machine which achieves cost reductions by reducing the processes involved in manufacture.

### MEANS FOR SOLVING THE PROBLEM

In order to solve the above problem, a rotating electric machine according to the present invention comprises: a rotating shaft; and a rotor including a conductor capable of generating a rotating magnetic field, the rotor being provided on a peripheral surface of the rotating shaft so as to be rotatable integrally therewith, wherein the rotating shaft includes: an oil supply passage passing within the rotating shaft; and an oil supply hole extending from the oil supply passage to the peripheral surface of the rotating shaft and opening opposite to the rotor, and the rotor includes an oil passage which is disposed so as to face the peripheral surface of the rotating shaft and which communicates with the oil supply hole.

Also, a rotating electric machine according to the present invention includes: a rotating shaft; a rotor including a conductor capable of generating a rotating magnetic field, the rotor being provided on a peripheral surface of the rotating shaft so as to be rotatable integrally therewith; an oil storage portion; and an oil supply mechanism supplying oil from in the oil storage portion to the rotating shaft, wherein the rotating shaft includes: an oil supply passage passing within the rotating shaft; an oil supply hole extending from the oil supply passage to the peripheral surface of the rotating shaft and opening opposite to the rotor; and an oil receiving hole extending from the oil supply passage to the peripheral surface of the rotating shaft and opening at a portion of the rotating shaft that projects from the rotor, the oil supply mechanism supplying oil to the oil receiving hole.

### ADVANTAGEOUS EFFECT OF THE INVENTION

According to the rotating electric machine relating to the present invention, it is possible to lower costs by reducing the processes involved in manufacture.

### BRIEF DESCRIPTION OF THE DRAWINGS

Fig. 1 is a schematic cross-sectional side view showing a construction of a rotational electrical machine according to an embodiment of the present invention;
Fig. 2 is a schematic cross-sectional view taken along line II - II in Fig. 1; and
Fig. 3 is a schematic cross-sectional view taken along line III - III in Fig. 1.

### MODE FOR CARRYING OUT THE INVENTION

### Embodiment

Below, an embodiment of the present invention is described with reference to the accompanying drawings.

A rotating electric machine 101 according to the embodiment of the present invention will be explained as a double-rotor type of rotating electric machine equipped in a hybrid automobile provided with an engine.

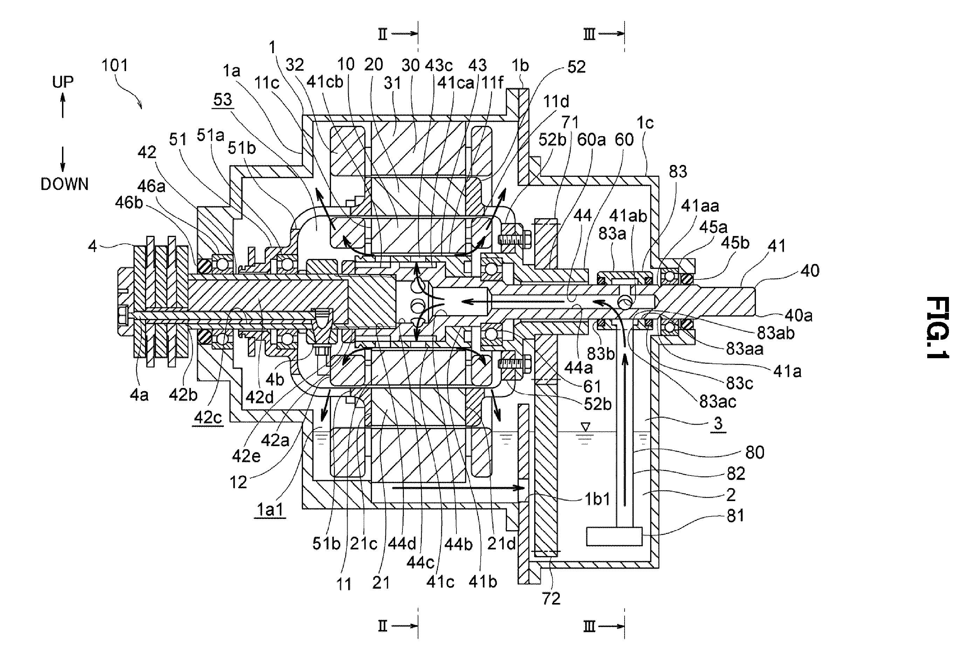

Referring to Fig. 1, the rotating electric machine 101 includes a housing 1. The housing 1 comprises a motor housing 1a which internally includes a first rotor 10, a second rotor 20 and a stator 30, an oil housing 1c defining an oil storage section 3 which stores oil 2 for cooling the first rotor 10, and the like, and a baffle plate 1b which is sandwiched between the motor housing 1a and the oil housing 1c to constitute a partition wall. Therefore, the housing 1 is formed by coupling these members together in such a manner that the baffle plate 1b is sandwiched between the motor housing 1a and the oil housing 1c.

Here, the first rotor 10 constitutes a rotor, and the second rotor 20 constitutes an outer rotor.

In the vicinity of the bottom of the interior of the motor housing 1a, an oil reservoir section 1a1 is defined by the motor housing 1a and the baffle plate 1b, and in the vicinity of the bottom of the interior of the oil housing 1c, an oil storage section 3 is defined by the oil housing 1c and the baffle plate 1b.

Furthermore, a plate communicating hole 1b1 is formed in the baffle plate 1b at a position in the vicinity of the bottom of the motor housing 1a, and the plate communicating hole 1b1 communicates the oil reservoir section 1a1 with the oil storage section 3. Hence, the oil which has collected in the oil reservoir 1a1 and the oil storage section 3 is at the same level, but the effects of disturbances such as flow occurring in the oil 2 in each section, on the oil 2 in another section, are diminished.

The rotating electric machine 101 includes an input shaft 40, the respective ends of which extend outside through the motor housing 1a and the oil housing 1c. The input shaft 40 is disposed above the oil reservoir section 1a1 and the oil storage section 3 inside the housing 1. Moreover, the end 40a of the input shaft 40 which projects out from the oil housing 1c is mechanically connected to an engine (not shown). On the other hand, slip rings 4 are attached on the other end of the input shaft 40, which projects out from the motor housing 1a, so as to rotate integrally with the input shaft 40. The slip rings 4 are electrically connected to an inverter via a brush (not shown), and can supply and receive AC current to and from the inverter. The input shaft 40 constitutes a rotating shaft.

Here, the direction from the input shaft 40 towards the oil reservoir section 1a1 and the oil storage section 3 is called the downward direction and the opposite direction is called the upward direction. The rotating electric machine 101 is installed in the automobile with the oil reservoir section 1a1 and the oil storage section 3 positioned on the downward side.

Further, the input shaft 40 comprises a first input shaft part 41, a second input shaft part 42 and a third input shaft part 43, which are integrated by mutually fitting together.

The first input shaft part 41 has a generally bottomed cylindrical shape, extends outside from the interior of the motor housing 1a through the oil housing 1c, so as to extend to the outside, and is mechanically connected to the engine (not shown). The outer diameter of the first input shaft part 41 changes at intermediate points. Hence, the first input shaft part 41 includes a small-diameter part 41a forming the end thereof on the oil housing 1c side, a large-diameter section 41c forming the end thereof on the motor housing 1a side, and a medium-diameter section 41b located between the small-diameter section 41a and the large-diameter section 41c and having an outer diameter between those of the small-diameter section 41a and the large-diameter section 41c. The medium-diameter section 41b and the large-diameter section 41c are positioned inside the motor housing 1a.

Moreover, in the first input shaft part 41, a bottomed cylindrical axial hole 44 is formed along the axial direction thereof from the large-diameter section 41c to the intermediate part of the small-diameter section 41a.

The axial hole 44 is opened at the end of the large-diameter section 41c and decreases its diameter in four steps towards the small-diameter section 41a. In other words, the axial hole 44 comprises: a cylindrical fitting hole section 44d which is opened at the end of the large-diameter section 41c, a third cylindrical oil passage section 44c which is axially adjacent to the fitting hole section 44d and has a smaller inner diameter than the fitting hole section 44d, a second cylindrical oil passage section 44b which is axially adjacent to the third oil passage section 44c and has a smaller inner diameter than the third oil passage section 44c, and a first cylindrical oil passage section 44a which is adjacent axially to the second oil passage section 44b and has a smaller inner diameter than the second oil passage section 44b.

Here, the first oil passage section 44a, the second oil passage section 44b and the third oil passage section 44c constitute an oil supply passage.

Either splines following the axial direction or an internal thread are formed on the inner circumferential surface of the fitting hole section 44d.

The third oil passage section 44c is positioned to the inside of the large-diameter section 41c.

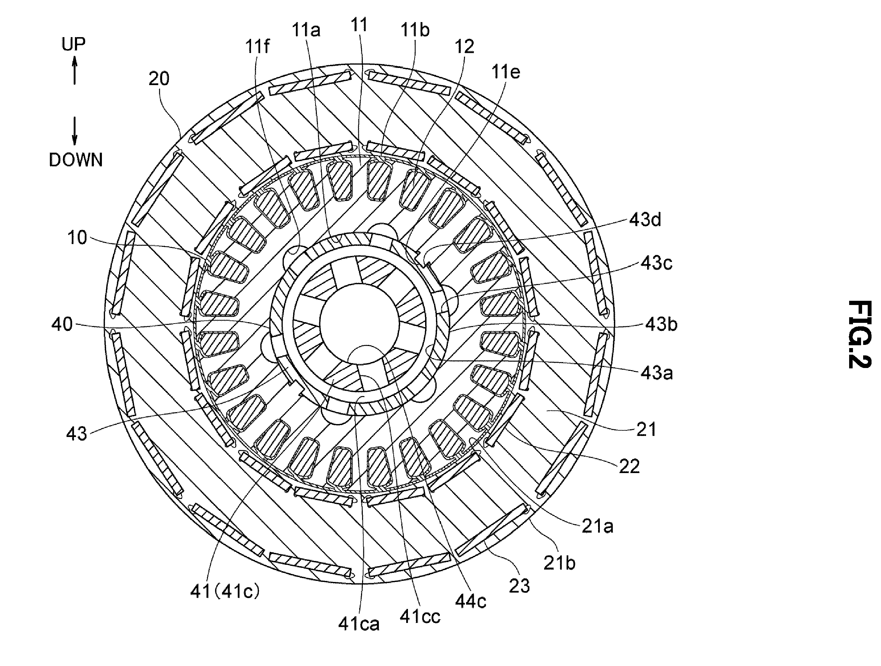

In addition, on the outer circumferential surface of the large-diameter section 41c, two outer circumferential channels 41ca and 41cb are formed in mutually adjacent fashion in the peripheral direction on either side of a partition portion. The outer circumferential channels 41ca and 41cb are communicated with each other through communicating channels (not shown) which are formed through the partition portion between the channels 41ca and 41cb. Moreover, inside the large-diameter section 41c, a plurality of axis-side oil supply passages 41cc (see Fig. 2), which communicate the third oil passage section 44c with the outer circumferential channel 41ca, are formed so as to extend from the third oil passage section 44c in radial directions of the large-diameter section 41c in an even spacing and radiating fashion.

The second oil passage section 44b is disposed from the inner side of the large-diameter section 41c to the inner side of the medium-diameter section 41b.

The first oil passage section 44a is disposed from the inner side of the medium-diameter section 41b to the inner side of the small-diameter section 41a.

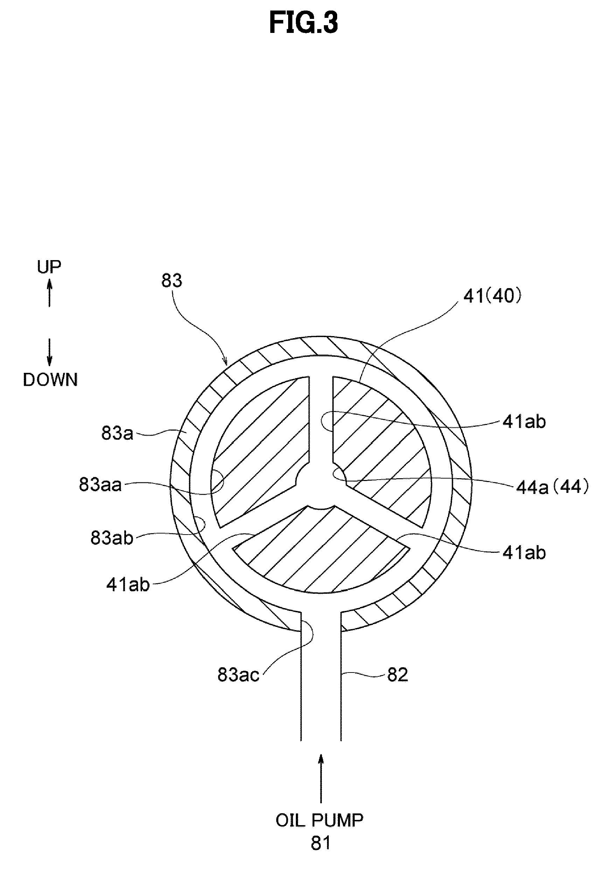

Furthermore, inside the small-diameter section 41a, a plurality of oil receiving holes 41ab, which communicate the first oil passage section 44a with the outer circumferential surface 41aa that is the peripheral surface of the small-diameter section 41a, are formed so as to extend from the first oil passage section 44a in the radial directions of the small-diameter section 41a in an even spacing and radiating fashion (see Fig. 3).

The second input shaft part 42 has a bottomed cylindrical shape, and extends from inside to outside the motor housing 1a. Either splines following the axial direction or an external thread are formed on the outer circumferential surface of the end 42a of the second input shaft part 42 which is located on the inner side of the motor housing 1a. The second input shaft part 42 is jointed to the first input shaft part 41 by inserting the end 42a into the fitting hole section 44d and fitting together the splines, or by screw-fastening together. Moreover, as shown in Fig. 1, the first input shaft part 41 and the second input shaft part 42 are fixed together so as to be able to rotate in unison, by screwing a lock nut 42e from the outer side onto an external thread, which is formed in the vicinity of the above splines or external thread on the outer circumferential surface of the end 42a of the second input shaft part 42, and further by fastening the lock nut 42e onto the first input shaft part 41. In this case, the end 42a of the second input shaft part 42 closes off one end of the third oil passage section 44c of the first input shaft part 41.

Furthermore, inside the second input shaft part 42, a cylindrical recess 42c is formed from the end 42b opposite to the end 42a toward the end 42a.

A plurality of conductor bars 4a connected to the slip rings 4 are disposed in the recess 42c. A connection terminal 4b is connected to one end of each conductor bar 4a which is located in the recess 42c. The connection terminal 4b extends through the second input shaft part 42 from the recess 42c to the outside. The other end of each conductor bar 4a extends outside the recess 42c and is connected to the slip ring 4.

Further, a base material 42d made from resin is filled in the recess 42c. The base material 42d electrically insulates the conductor bars 4a from the periphery, such as the second input shaft part 42, as well as supporting the slip rings 4 and the conductor bars 4a.

In the first input shaft part 41 and the second input shaft part 42 which are jointed to each other, the first input shaft part 41 is supported rotatably by the oil housing 1c via a bearing 45a, and the space between the first input shaft part 41 and the oil housing 1c is sealed in a water-tight fashion by an annular seal 45b. The second input shaft part 42 is supported rotatably by the motor housing 1a via a bearing 46a, and the space between the second input shaft part 42 and the motor housing 1a is sealed in a water-tight fashion by an annular seal 46b.

The third input shaft part 43 has a generally cylindrical shape, and is provided so as to surround the outer periphery of the first input shaft part 41 from the large-diameter section 41c to one portion of the medium-diameter section 41b, and to fit onto the first input shaft part 41. For example, the third input shaft part 43 and the first input shaft part 41 are fitted to each other by means of splines, keys and keyways, etc., that are formed in the respective inner circumferential surface and outer circumferential surface. Consequently, the third input shaft part 43 is integrated with the first input shaft part 41 and can rotate about the central axis of the first input shaft part 41.

Referring to Fig. 2, in the third input shaft part 43, a plurality of first rotor oil supply holes 43c are formed so as to extend through it from the inner circumferential surface 43a thereof to the outer circumferential surface 43b as a peripheral surface, in radial directions of the third input shaft part 43 in an even spacing and radiating fashion. The first rotor oil supply holes 43c are formed at positions opposing the outer circumferential channel 41ca formed on the outer circumferential surface of the first input shaft part 41 so that the first rotor oil supply holes 43c communicate with the outer circumferential channel 41ca. Moreover, the first rotor oil supply holes 43c are formed at positions which are located between the axis-side oil supply passages 41cc in the radial direction of the cross-section of the first input shaft part 41. In other words, the first rotor oil supply holes 43c are arranged at positions which are staggered with respect to the axis-side oil supply passages 41cc in the radial direction in the cross-section of the first input shaft part 41.

Here, the first rotor oil supply holes 43c constitute oil supply holes.

Returning to Fig. 1, the plurality of first rotor oil supply holes 43c are also formed at positions opposing the outer circumferential channel 41cb formed on the outer circumference surface of the first input shaft part 41 so that the first rotor oil supply holes 43c communicate with the outer circumferential channel 41ca.

Moreover, in the rotating electric machine 101, a cylindrical first rotor 10 is provided inside the motor housing 1a so as to surround the periphery of the third input shaft part 43 of the input shaft 40 on the outer side thereof in the radial direction.

Referring also to Fig. 2, the first rotor 10 includes a cylindrical first core 11 which surrounds the periphery of the third input shaft part 43, and a first coil 12 which comprises winding wires that are annularly embedded in the vicinity of the outer circumferential surface 11b of the first core 11 along the circumferential direction and also project from the ends 11c and 11d of the first core 11. The first core 11 is made from a magnetic material such as iron. The portion of the first coil 12 that projects from the end 11c of the first core 11 is electrically connected to the connection terminals 4b which are connected to the conductor bars 4a that extend from the slip rings 4. Here, the first coil 12 constitutes a conductor.

A plurality of strip-shaped key fitting projections 11e having a rectangular cross-section are formed to project in an inward radial direction, on the inner circumferential surface 11a of the first core 11 which faces the third input shaft part 43. The key fitting projections 11e mate with a plurality of key fitting grooves 43d having a rectangular cross-sectional shape which are formed on the outer circumferential surface 43b of the third input shaft part 43. As a result, the first core 11 can rotate integrally with the third input shaft part 43.

Further, a plurality of cutout grooves 11f are formed on the inner circumferential surface 11a of the first core 11, at positions facing the first rotor oil supply holes 43c in the third input shaft part 43. The cutout grooves 11f respectively communicate with the first rotor oil supply holes 43c, and also extend along the direction of the cylindrical axis of the first core 11, and open at the respective ends 11c and 11d of the first core 11. Therefore, the cutout grooves 11f communicate the first rotor oil supply holes 43c with the exterior of the respective ends 11c and 11d of the first core 11. The cutout grooves 11f having the configuration as described above can be formed simply by making cuts during the press-working in the manufacture of the first core 11, and therefore the cutout grooves 11f can be formed easily. Furthermore, the cutout grooves 11f are formed near the boundary between the inner circumferential surface 11a of the first core 11 and the input shaft 40 (third input shaft part 43), and therefore do not affect the formation of the first coil 12 near the outer circumferential surface 11b of the first core 11. Here, the cutout grooves 11f constitute oil flow passages.

Also, the rotating electric machine 101 includes a cylindrical second rotor 20 provided inside the motor housing 1a so as to surround the periphery of the first rotor 10 on the outer side thereof in the radial direction.

The second rotor 20 includes: a cylindrical second core 21 which surrounds the outer circumferential surface 11b of the first core 11 of the first rotor 10 and is provided so as to be rotatable relative to the first core 11; a plurality of first permanent magnets 22 which are annularly embedded along the circumferential direction in the vicinity of the inner circumferential surface 21a of the second core 21 which faces the outer circumferential surface 11b of the first core 11; and a plurality of second permanent magnets 23 which are annularly embedded along the circumferential direction in the vicinity of the outer circumferential surface 21b of the second core 21 which faces the inner circumferential surface 21a. The second core 21 is made from a magnetic material, such as iron. Here, the first permanent magnets 22 constitute a field magnet.

Referring to Fig. 1, the rotating electric machine 101 includes generally bottomed cylindrical-shaped rotor brackets 51 and 52 provided inside the motor housing 1a so as to encompass the periphery of the input shaft 40 and the first rotor 10 and sandwich and support the second rotor 20 from the two ends 21c and 21d of the second core 21. The rotor brackets 51 and 52, together with the second rotor 20, define a first rotor accommodation space 53 in which the first rotor 10 is contained, and shut off the first rotor 10 from the outside. Here, the rotor brackets 51 and 52 constitute supports.

The first rotor bracket 51 is disposed on the end 21c side, in other words, the slip ring 4 side, with respect to the second core 21, and is connected integrally with the second core 21 by means of fasteners, or the like, which are not shown. The first rotor bracket 51 includes a bearing 51a provided at an inner side position thereof, through which the second input shaft part 42 of the input shaft 40 is passed. By this means, the first rotor bracket 51 is supported in a relatively rotatable fashion by the second input shaft part 42, via the bearing 51a. Moreover, a plurality of oil discharge openings 51b which pass through the wall of the first rotor bracket 51 are formed in the first rotor bracket 51 on the slip ring 4 side of the end 11c of the first core 11 of the first rotor 10. The oil discharge openings 51b communicate the first rotor accommodation space 53 to the outside of the first rotor bracket 51.

The second rotor bracket 52 is disposed on the end 21d side, in other words, the oil housing 1c side, with respect to the second core 21, and is connected integrally with the second core 21 by means of fasteners, or the like, which are not shown. The second rotor bracket 52 is connected by fasteners integrally with a generally cylindrical output shaft 60 which is provided so as surround the periphery of the first input shaft part 41 of the input shaft 40 on the outer side thereof in the radial direction. Moreover, a plurality of oil discharge openings 52b which pass through the wall of the second rotor bracket 52 are formed in the second rotor bracket 52 on the oil housing 1c side of the end 11d of the first core 11 of the first rotor 10. The oil discharge openings 52b communicate the first rotor accommodation space 53 to the outside of the second rotor bracket 52.

The output shaft 60 extends into the oil housing 1c from the connection with the second rotor bracket 52. Moreover, the output shaft 60 includes a bearing 61 at a position facing the medium-diameter section 41b of the first input shaft part 41, and is supported in a relatively rotatable fashion by the first input shaft part 41, via the bearing 61. The second rotor bracket 52 is also supported in a relatively rotatable fashion by the first input shaft part 41 via the output shaft 60 and the bearing 61.

Furthermore, a pinion gear 71 is provided and connected by means of spline engaging, key fitting, or the like, on the outer circumferential surface 60a of the output shaft 60 which is located inside the oil housing 1c. The pinion gear 71 is rotatable about the input shaft 40 in unison with the output shaft 60.

Therefore, the second rotor 20, the rotor brackets 51 and 52, the output shaft 60 and the pinion gear 71 are rotatable as a unit relatively about the input shaft 40.

Moreover, a driven gear 72 is provided inside the oil housing 1c, and this driven gear 72 engages with the pinion gear 71 and is immersed in the oil 2 inside the oil storage section 3. Furthermore, a drive shaft (not shown) is connected integrally with the driven gear 72, and the drive shaft extends to the outside of the oil housing 1c and is mechanically connected to the wheels of an automobile via a differential, or the like. Therefore, the rotational driving force of the second rotor 20 is transferred to the wheels of an automobile, thereby driving the wheels, via the pinion gear 71 and the driven gear 72. Since the oil 2 in the oil storage section 3 is supplied at all times to the gear forming surface of the driven gear 72, then the engaging portion between the driven gear 72 and the pinion gear 71 is lubricated by the oil 2.

The rotating electric machine 101 also includes a cylindrical stator 30 provided so as to surround the periphery of the second rotor 20 on the outer side thereof in the radial direction, where the stator 30 is provided inside the motor housing 1a.

The stator 30 includes: a cylindrical stator core 31 which is provided so as to surround the outer circumferential surface 21b of the second core 21 of the second rotor 20 (see Fig. 2) and so as to enable the second core 21 to rotate relatively; and a stator coil 32 which is annularly embedded along the circumferential direction in the vicinity of the inner circumferential surface of the stator core 31 facing the outer circumferential surface 21b of the second core 21, and which also projects from either end of the stator core 31. The stator core 31 is made from a magnetic material such as iron. The stator coil 32 is electrically connected to an inverter (not shown) which is provided outside the housing 1, and can receive and supply AC current from and to the inverter.

The rotating electric machine 101 includes an oil supply mechanism 80 on the first input shaft part 41 of the input shaft 40 between the output shaft 60 and the bearing 45a.

The oil supply mechanism 80 includes: an oil pump 81 which is immersed in the oil 2 in the oil storage section 3; a rotary joint 83 provided so as to surround the portion of the small-diameter section 41a of the first input shaft part 41, in the portion thereof where the oil receiving holes 41ab are opened; and an oil supply pipe 82 which communicates the oil pump 81 with the interior of the rotary joint 83.

The rotary joint 83 includes a cylindrical main body 83a provided so as to surround the periphery of the small-diameter section 41a of the first input shaft part 41 on the outer side thereof in the radial direction, and annular seals 83b and 83c which are provided on the inside of either end of the main body 83a. The annular seals 83b and 83c are provided between the cylindrical inner circumferential surface 83aa of the main body 83a and the cylindrical outer circumferential surface 41aa of the small-diameter section 41a, and water-tightly seal the space therebetween.

Referring also to Fig. 3, an annular inner circumferential channel 83ab is formed along the circumferential direction on the inner circumferential surface 83aa of the main body 83a. The inner circumferential channel 83ab communicates with all of the oil receiving holes 41ab. Moreover, a communicating hole 83ac is formed in the main body 83a to extend downwardly from the inner circumferential channel 83ab and open to the outside of the main body 83a. The communicating hole 83ac is connected to the oil supply pipe 82. Furthermore, the main body 83a is fixed to the oil housing 1c and thus the input shaft 40 rotates relative to the main body 83a. Therefore, the oil 2 which is pumped up by the oil pump 81 can be supplied to the axial hole 44 in the input shaft 40 in a rotating state, via the oil supply pipe 82, the communicating hole 83ac, the inner circumferential channel 83ab and the oil receiving holes 41ab, with the input shaft 40.

Referring to Fig. 1 and Fig. 2 together, in the rotating electric machine 101 having the configuration described above, the oil 2 in the oil storage section 3 is supplied to the first rotor 10 in the following manner to cool it with the supplied oil 2.

More specifically, the oil 2 in the oil storage section 3 is pumped up by the oil pump 81 of the oil supply mechanism 80, and is force-fed into the inner circumferential channel 83ab of the main body 83a of the rotary joint 83, via the oil supply pipe 82. The oil 2 in the inner circumferential channel 83ab is force-fed into the first oil passage section 44a of the axial hole 44 in the input shaft 40, via the oil receiving holes 41ab, regardless of whether or not the input shaft 40 is rotating. The oil 2 in the first oil passage section 44a is force-fed through the second oil passage section 44b in the axial hole 44 to the third oil passage section 44c. The oil 2 in the third oil passage section 44c is fed and distributed to the plurality of axis-side oil supply passages 41cc which extend in a radiating fashion from the third oil passage section 44c. Moreover, the oil 2 in the respective axis-side oil supply passages 41cc is fed to the outer circumferential channel 41ca and a part of the oil 2 in the outer circumferential channel 41ca is fed to the adjacently positioned outer circumferential channel 41cb. The above oil 2 is subsequently distributed to the plurality of first rotor oil supply holes 43c, and then conveyed into the plurality of cutout grooves 11f which are formed on the inner circumferential surface 11a of the first core 11 of the first rotor 10.

In this case, the supply of oil 2 from the third oil passage section 44c into the cutout grooves 11f is performed by means of the pumping pressure of the oil pump 81, and the centrifugal force generated in the outward radial direction in the cross-section of the input shaft 40, when the input shaft 40 is rotating.

The axis-side oil supply passages 41cc distribute the oil 2 inside the third oil passage section 44c wholly in the cross-sectional directions of the input shaft 40. The outer circumferential channel 41ca equalizes the circumferential distribution of the oil 2 by provisionally collecting the distributed oil 2. Moreover, the first rotor oil supply holes 43c supply oil 2 respectively to the cutout grooves 11f which are disposed at even intervals in the circumferential direction of the inner circumferential surface 11a of the first core 11. Consequently, the oil 2 is supplied uniformly to each of the cutout grooves 11f.

The oil 2 in the cutout grooves 11f flows through the cutout grooves 11f in the axial direction, and is discharged into the first rotor accommodation space 53 from the respective ends 11c and 11d of the first core 11. The oil 2 exchanges heat with, and thereby cools, the first core 11 of the first rotor 10, in the process of flowing in the cutout grooves 11f.

Further, the oil 2 which has been discharged into the first rotor accommodation space 53 is discharged through the oil discharge openings 51b and 52b in the rotor brackets 51 and 52 to the outside of the rotor brackets 51 and 52 in the motor housing 1a, and thereafter flows down into the oil reservoir section 1a1 in the bottom of the motor housing 1a.

As described above, the rotating electric machine 101 according to the embodiment of the present invention comprises; the input shaft 40; and the first rotor 10 which includes the first coil 12 that is capable of generating a rotating magnetic field and which is provided on the outer circumferential surface 43b of the input shaft 40 so as to be rotatable integrally therewith. The input shaft 40 includes: the oil passage sections 44a to 44c passing in the input shaft 40; and the first rotor oil supply holes 43c which extend from the third oil passage section 44c to the outer circumferential surface 43b of the input shaft 40 and open opposite to the first rotor 10. The first rotor 10 includes the cutout grooves 11f which are disposed so as to face the outer circumferential surface 43b of the input shaft 40 and which communicate with the first rotor oil supply holes 43c.

Consequently, in the rotating electric machine 101, the oil passage for cooling the first rotor 10 can be configured merely by forming, in the input shaft 40, the oil passage sections 44a to 44c and the first rotor oil supply holes 43c extending from the third oil passage section 44c and by further forming the cutout grooves 11f in the first rotor 10. Therefore, it is possible to reduce the number of processes involved in manufacturing and consequently to reduce costs. Moreover, by making the cutout grooves 11f have a groove shape which can be formed together with the first core 11 of the first rotor 10 during the pressing process thereof, it is possible to further reduce the labor hours for processing in the manufacture. Furthermore, the cutout grooves 11f are formed on a portion opposing the outer circumferential surface 43b of the input shaft 40 in the first core 11, in other words, on the inner circumferential surface 11a. Therefore, the formation of the cutout grooves 11f does not affect the formation of the first coil 12 which is disposed at a position that is not adjacent to the inner circumferential surface 11a, for example, at a position of the outer circumferential surface 11b side from the center of the first core 11. Accordingly, the cutout grooves 11f and the first coil 12 can be formed independently of each other, and therefore the labor hours for processing in the manufacture can be reduced.

Further, in the rotating electric machine 101, the oil which has flowed through the cutout grooves 11f of the first rotor 10 may be configured to flow out from the sides, and the like, of the first rotor 10 and flow down to the bottom in the housing 1, and therefore it is possible to limit the circulation path of the oil in a narrow region inside the housing 1. Accordingly, the oil is prevented from becoming attached to the slip rings 4, without the need to provide any special structure.

Also, the rotating electric machine 101 comprises the oil storage section 3 and the oil supply mechanism 80 which supplies the oil in the oil storage section 3 to the input shaft 40. The input shaft 40 includes the oil receiving holes 41ab which extend to the outer circumferential surface 41aa of the input shaft 40 from the first oil passage section 44a and open into the small-diameter section 41a of the input shaft 40 that projects from the first rotor 10. The oil supply mechanism 80 includes the oil pump 81 which pumps the oil in the oil storage section 3, and the rotary joint 83 which connects the input shaft 40 rotatably with respect to the oil supply pipe 82 extending from the oil pump 81 and communicates the oil receiving holes 41ab of the input shaft 40 with the oil supply pipe 82.

Consequently, the oil is supplied to the inside of the input shaft 40 through the outer circumferential surface 41aa thereof. By providing the rotary joint 83 at the oil receiving holes 41ab on the outer circumferential surface 41aa, even when the input shaft 40 rotates, the oil fed by the oil pump 81 is supplied reliably to the oil passage sections 44a to 44c in the input shaft 40 through the oil receiving holes 41ab. Moreover, the above configuration can be achieved by a simple configuration where the oil receiving holes 41ab are merely formed on the outer circumferential surface 41aa of the input shaft 40 and further the rotary joint 83 is provided thereon. Furthermore, since the oil receiving holes 41ab are located on the outer circumferential surface 41aa rather than the end surface of the input shaft 40, for instance, in cases where a drive device is connected directly to the end of the input shaft 40, the oil receiving holes 41ab need only to be positioned outside the connecting portion. Therefore, it is possible to dispense with the processing of the connecting portion for making oil flow passages, etc., which lead to the oil receiving holes 41ab.

Further, in the input shaft 40 of the rotating electric machine 101, a path for supplying oil to the cutout grooves 11f in the first rotor 10 thorough the inside of the input shaft 40 can be formed merely by the following steps : the oil passage sections 44a to 44c and the fitting hole section 44d extending in the axial direction, the outer circumferential channels 41ca and 41cb, the axis-side oil supply passages 41cc extending in the radial direction, and oil receiving holes 41ab are formed in the first input shaft part 41; the first rotor oil supply holes 43c extending in the radial direction are formed in the third input shaft part 43; and the input shaft parts 41 to 43 are incorporated with each other. Accordingly, the formation of the oil supply path in the input shaft 40 can be simplified, and furthermore, the man hours for forming the oil supply path can be reduced.

Also, the rotating electric machine 101 comprises the second rotor 20 which is provided radially outside the first rotor 10 and is rotatable relative to the first rotor 10. The second rotor 20 includes the first permanent magnets 22 which are disposed so as to face the conductor (the first coil 12) of the first rotor 10. Moreover, the second rotor 20 is supported by the rotor brackets 51 and 52 which are supported rotatably by the input shaft 40 and surround the first rotor 10.

As described above, even with a configuration where the first rotor 10 is surrounded by the rotor brackets 51 and 52, in the rotating electric machine 101, the oil is supplied to the cutout grooves 11f in the first rotor 10 which face the outer circumferential surface 43b of the input shaft 40, by passing via the inside of the input shaft 40, and therefore the oil is able to cool the first rotor 10 reliably. Moreover, in the rotating electric machine 101, the first rotor 10 can also be oil-cooled without providing a complicated structure such as a system for supplying and circulating oil from an upper portion where the stator is provided, as generally adopted in the oil cooling of a rotating electric machine built into a transaxle.

In the rotating electric machine 101 according to the embodiment, the oil passes from the third oil passage section 44c of the input shaft 40 to the cutout grooves 11f in the first rotor 10 via the axis-side oil supply passages 41cc, the outer circumferential channels 41ca and 41cb, and the first rotor oil supply holes 43c. However, the invention is not limited to this configuration. The axis-side oil supply passages 41cc may be extended in such a manner that the oil reaches the cutout grooves 11f from the third oil passage section 44c by passing via only the axis-side oil supply passages 41cc.

Also, in the rotating electric machine 101 according to the embodiment, the plurality of axis-side oil supply passages 41cc, first rotor oil supply holes 43c and oil receiving holes 41ab are formed, but the invention is not limited to this configuration. It may be necessary for more than one of any of them.

Moreover, in the rotating electric machine 101 according to the embodiment, the only grooves along the cylindrical axis of the first rotor 10 are formed as the cutout grooves 11f in the first rotor 10, but the invention is not limited to this configuration. One or more grooves along the circumferential direction of the first rotor 10 may also be formed to connect together the cutout grooves 11f which extend in the axial direction. Accordingly, it is possible to increase the contact surface area between the oil and the first rotor 10.

Also, in the rotating electric machine 101 according to the embodiment, the first coil 12 is provided in the first rotor 10, the first permanent magnets 22 and the second permanent magnets 23 are provided in the second rotor 20, and the stator coil 32 is provided in the stator 30, but the invention is not limited to this configuration. It is sufficient if the first coil 12 is provided in the first rotor 10. For example, in the second core 21 of the second rotor 20, the first permanent magnets 22 and the second permanent magnets 23, which are annularly provided in two rows in the vicinity of the inner circumferential surface 21a and the outer circumferential surface 21b respectively, may be annularly embedded in one row near the center of the second core 21. Alternatively, the permanent magnets and the coil may be embedded respectively in the vicinity of the inner circumferential surface 21a and the outer circumferential surface 21b of the second core 21 of the second rotor 20, and the permanent magnets may be embedded in the stator 30.

Further, in the rotating electric machine 101 according to the embodiment, the first permanent magnets 22 and the second permanent magnets 23 are used as a field magnet, but the invention is not limited to this configuration. The field magnet may be an electromagnet.

Also, the rotating electric machine 101 according to the embodiment is a double rotor type of rotating electric machine, but the invention is not limited to this configuration, provided that there is at least one rotor.

### EXPLANATION OF REFERENCE NUMERALS

2 oil, 3 oil storage section, 10 first rotor (rotor), 11f cutout groove (oil passage), 12 first coil (conductor), 20 second rotor (outer rotor), 22 first permanent magnet (field magnet), 40 input shaft (rotating shaft), 41a small-diameter part (portion projecting from rotor in rotating shaft), 41aa outer circumferential surface (peripheral surface of rotating shaft), 41ab oil receiving holes, 43b outer circumferential surface (peripheral surface of rotating shaft), 43c first rotor oil supply hole (oil supply hole), 44a to 44c oil passage section (oil supply passage), 51 first rotor bracket (support), 52 second rotor bracket (support), 80 oil supply mechanism, 81 oil pump, 82 oil supply pipe, 83 rotary joint, 101 rotating electric machine

## Claims

1. A rotating electric machine, comprising:
a rotating shaft; and
a rotor including a conductor capable of generating a rotating magnetic field, the rotor being provided on a peripheral surface of the rotating shaft so as to be rotatable integrally therewith,
wherein the rotating shaft includes:
an oil supply passage passing within the rotating shaft; and
an oil supply hole extending from the oil supply passage to the peripheral surface of the rotating shaft and opening opposite to the rotor, and
the rotor includes an oil passage which is disposed so as to face the peripheral surface of the rotating shaft and which communicates with the oil supply hole.

2. A rotating electric machine, comprising:
a rotating shaft;
a rotor including a conductor capable of generating a rotating magnetic field, the rotor being provided on a peripheral surface of the rotating shaft so as to be rotatable integrally therewith;
an oil storage portion; and
an oil supply mechanism supplying oil in the oil storage portion to the rotating shaft,
wherein the rotating shaft includes:
an oil supply passage passing within the rotating shaft;
an oil supply hole extending from the oil supply passage to the peripheral surface of the rotating shaft and opening opposite to the rotor; and
an oil receiving hole extending from the oil supply passage to the peripheral surface of the rotating shaft and opening at a portion of the rotating shaft that projects from the rotor, the oil supply mechanism supplying oil to the oil receiving hole.

3. The rotating electric machine according to claim 2, wherein the oil supply mechanism includes:
a pump pumping oil in the oil storage portion; and
a rotary joint connecting the rotating shaft rotatably to an oil supply pipe extending from the pump, the rotary joint communicating the oil receiving hole of the rotating shaft with the oil supply pipe.

4. The rotating electric machine according to claim 2 or 3, wherein the rotor includes an oil passage which is disposed so as to face the peripheral surface of the rotating shaft and which communicates with the oil supply hole.

5. The rotating electric machine according to any one of claims 1 to 4,
further comprising an outer rotor provided radially outside the rotor, the outer rotor being rotatable relative to the rotor,
wherein the outer rotor includes a field magnet disposed so as to face the conductor of the rotor.

6. The rotating electric machine according to claim 5, wherein the outer rotor is rotatably supported by the rotating shaft and is also supported by a support which surrounds the rotor.

7. The rotating electric machine according to any one of claim 1 and claims 5 and 6 citing claim 1,
further comprising: an oil storage portion; and an oil supply mechanism supplying oil in the oil storage portion to the rotating shaft,
wherein the rotating shaft includes: an oil receiving hole extending from the oil supply passage to the peripheral surface of the rotating shaft and opening at a portion of the rotating shaft that projects from the rotor, and
the oil supply mechanism includes:
a pump pumping oil in the oil storage portion; and
a rotary joint connecting the rotating shaft rotatably to an oil supply pipe extending from the pump, the rotary joint communicating the oil receiving hole of the rotating shaft with the oil supply pipe.
